(19) Europäisches Patentamt
European Patent Office
Office européen des brevets

(11) **EP 2 716 697 A1**

(12) **DEMANDE DE BREVET EUROPEEN**

(43) Date de publication:
**09.04.2014 Bulletin 2014/15**

(21) Numéro de dépôt: **13187741.7**

(22) Date de dépôt: **08.10.2013**

(51) Int Cl.:
*C08J 9/00* (2006.01)     *C08J 9/06* (2006.01)
*C09J 189/00* (2006.01)     *C09J 191/00* (2006.01)
*C08L 79/02* (2006.01)     *C08L 89/00* (2006.01)
*C08L 91/00* (2006.01)     *C08L 97/02* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **08.10.2012 FR 1259572**

(71) Demandeur: **Codem Picardie Construction Durable et Eco Materiaux Picardie 80480 Dury (FR)**

(72) Inventeurs:
• **Crigny, Antoine**
  **80540 Clairy-Saulchoix (FR)**
• **Dupre Blaise**
  **80000 Amiens (FR)**

(74) Mandataire: **Regimbeau**
  **20, rue de Chazelles**
  **75847 Paris Cedex 17 (FR)**

(54) **Composition comprenant une huile et une protéine**

(57)     L'invention concerne une composition comprenant une huile et une protéine, l'huile étant du baume de cajou ou de l'huile de neem ou de l'huile de lin ou un mélange de ceux-ci.

L'invention concerne également une composition aérée solide comprenant une huile, une protéine et un agent d'expansion, l'huile étant du baume de cajou ou de l'huile de neem ou de l'huile de lin ou un mélange de ceux-ci.

L'invention concerne aussi un procédé de fabrication d'une telle composition aérée solide.

EP 2 716 697 A1

## Description

Domaine technique

La présente demande concerne le domaine des compositions pour colle ou adhésif.

La présente demande concerne également le domaine des compositions aérées solides pour la fabrication de matériau de construction.

La présente demande concerne aussi le domaine des procédés de fabrications d'une composition aérée solide.

État de la technique

La protection de l'environnement est devenue depuis une dizaine d'années un enjeu majeur graduellement intégré à la conscience collective.

Ceci se traduit de manière variée selon le domaine considéré, et plus particulièrement dans le domaine des produits de consommation courante par un retour à une simplification des produits, notamment de leur transformation et/ou composition.

Dans cette optique, les huiles sont souvent utilisées comme composé de base pour des compositions aux applications variées, telle que l'huile de soja. D'autres huiles que l'huile de soja ont déjà été utilisée dans le domaine des compositions pour colle et adhésif, telle que le baume de cajou (ou encore « Cashew Nutshell Liquid » en anglais, souvent désigné par le sigle CNSL).

Cependant, dans ces compositions, par exemple celle décrite dans le document EP2308939, d'autres composés sont mélangés au CNSL, tels que l'ammoniaque ou une amine qui ne sont pas sans effet nocif sur l'environnement.

Le CNSL est également utilisé dans le domaine des matériaux de construction, et plus particulièrement comme composé entrant dans la fabrication d'agent liant pour donner une cohésion à des particules ou fibres dispersées dans le matériau.

Cependant, le CNSL est utilisé en mélange avec d'autres composés tels qu'une résine liquide à base de phénol, des homologues de phénol ou de formaldéhyde pour la fabrication de matériaux réfractaires, tels que dans le document WO97/40195, des composés aldéhydes pour la fabrication de produits compactés à base de particules ou de fibres tels que dans le document EP15761.

Or, ces composés avec lesquels est mélangé le CNSL sont des composés pouvant avoir un impact négatif sur l'environnement et sur la santé

Il est connu d'utiliser une huile comme additif entrant dans la composition d'un agent liant, par exemple dans le document WO2010/120748. L'huile peut être à base de soja et est mélangée à une protéine pouvant être également à base de soja.

Cependant, ces compositions, notamment celles à base d'huile et de protéine, comprennent des ingrédients peu disponibles et coûteux. Elles nécessitent également l'emploi d'eau dans leur chaîne globale de fabrication. Ainsi, des problèmes liés à la présente d'eau peuvent survenir, tels que la variation dimensionnelle, des problèmes de séchage, la durabilité, mise à mal par exemple par des agents fongiques, biologiques ou le gel suivi de dégel.

Dans le domaine des compositions aérées, il est connu d'utiliser le CNSL comme source de monomère dans la fabrication de mousse, tel que décrit dans le document EP1930355. Le CNSL est mélangé à des composés organiques phénoliques présentant des fonctions OH en présence d'un agent d'expansion, un surfactant et au moins un catalyseur. Le CNSL peut encore être transformé en un composé phénolique par réaction avec le formaldéhyde pour ensuite obtenir une mousse comme le décrit le document GB756555.

Là encore les composés organiques phénoliques ou le formaldéhyde peuvent avoir un impact négatif sur l'environnement et sur la santé.

Ainsi, il est toujours besoin d'une composition pouvant être utilisée comme colle ou adhésif ayant un impact faible sur l'environnement. Il est aussi besoin d'une composition pour matériaux de construction ayant un impact faible sur l'environnement et sur la santé.

Présentation

Pour cela, la présente demande propose une composition comprenant une huile et une protéine, l'huile étant du baume de cajou, de l'huile de neem, de l'huile de lin ou un mélange de ceux-ci.

La présente demande propose également une composition aérée solide comprenant une huile, une protéine et un agent d'expansion, l'huile étant du baume de cajou, de l'huile de neem, de l'huile de lin ou un mélange de ceux-ci.

Ainsi, les matériaux de construction fabriqués à partir de l'une ou l'autre des compositions le sont à partir de matières premières biosourcées. Aussi, ces matériaux de construction ne nécessitent pas l'emploi d'eau (ou seulement très peu) contrairement aux matériaux de construction conventionnels et surtout contrairement aux matériaux de construction biosourcés qui de manière générale emploie de grande quantité d'eau. Ces matériaux de construction ne sont donc pas concernés par les risques de détérioration pour cause fongique, biologique ou climatique (gel puis dégel). Par ailleurs, l'absence d'eau dans la chaîne de production de ces matériaux de construction permet d'éviter des problèmes de variations dimensionnelles et/ou de séchage. Enfin, le fait de ne pas employer d'eau permet d'obtenir des matériaux plus hydrophobes que les matériaux nécessitant l'emploi d'eau.

La présente demande propose enfin un procédé de fabrication d'une composition aérée solide, comprenant les étapes de :

- le mélange d'une huile, d'une protéine et d'un agent d'expansion ;
- le chauffage du mélange à une température comprise entre 60 et 160°C, de préférence entre 70 et 100°C, encore de préférence environ 80°C pour obtenir la composition aérée solide.

Dessins

D'autres objectifs, caractéristiques et avantages apparaîtront à la lecture de la description qui suit en référence aux dessins donnés à titre illustratif et non limitatif, parmi lesquels :

- la figure 1 montre schématiquement un matériau de construction obtenu à partir d'un mélange de particules solides et d'un liant, le liant comprenant une huile et une protéine, l'huile étant du baume de cajou, de l'huile de neem ou de l'huile de lin ;
- la figure 2 montre schématiquement un matériau de construction obtenu à partir d'une composition aérée solide comprenant une huile, une protéine et un agent d'expansion, l'huile étant du baume de cajou, de l'huile de neem ou de l'huile de lin ;
- la figure 3 est un diagramme montrant les étapes d'un procédé pour la fabrication du matériau de construction de la figure 1 ; et
- la figure 4 est un diagramme montrant les étapes d'un procédé pour la fabrication du matériau de construction de la figure 2.

Description

La composition comprend une huile et une protéine. L'huile est choisi parmi du baume de cajou (ci-après CNSL), de l'huile de neem, de l'huile de lin ou un mélange de ceux-ci. De préférence, l'huile est du CNSL, un mélange d'huile de lin et du CNSL ou un mélange d'huile de neem et du CNSL. Encore de préférence, l'huile est du CNSL.

Le CNSL est une résine naturelle extraite de la coque de la noix de cajou (de la famille des anacardiacées, *Anacardiaceae* en notation scientifique) dont la structure est en nids d'abeille. Le CNSL est un sous-produit de la production de noix de cajou alimentaire, il est ainsi disponible et peu onéreux. Par ailleurs, il n'est pas utilisé dans l'alimentation humaine ou animale. Le CNSL obtenu à froid est principalement composé d'acides anacardiques (environ 70 %), de cardol (environ 18 %) et de cardanol (environ 5%). Chauffé, le CNSL voit ses acides anacardiques se décarboxyler, produisant un grade de CNSL riche en cardanol qui après distillation devient du CNSL technique contenant environ 78 % de cardanol et environ 8 % de cardol. Récemment, la demande en CNSL a dramatiquement augmenté, cette hausse est due au nouvel intérêt des industriels pour les matières premières bio-sourcées.

L'huile de neem est extraite des graines du fruit du margousier (*Azadirachta indica*) de a famille des méliacées, le margousier est aussi appelé neem. L'huile de neem possède généralement une couleur rouge sang, contient principalement des triglycérides et une importante quantité de composés triterpinoïdes dont l'azadirachtine. L'huile de neem est généralement utilisée pour la préparation de produits cosmétiques, notamment en Inde où le margousier est une espèce endémique. Elle est également utilisée en tant que bio-pesticide.

L'huile de lin est obtenue à partir des graines mûres et séchées du lin (*Linum usitatissimum*). Elle est obtenue par pression à froid ou parfois par extraction par solvant. L'huile de lin contient une importante quantité d'acide alpha-linolénique et d'esters tri-insaturés. Ainsi, c'est une huile qui se polymérise facilement en présence d'oxygène. L'huile de lin, comestible, est utilisée dans la fabrication de vernis, pigments ou plastifiants. L'huile de lin est également utilisée dans la fabrication du linoléum.

La protéine est de préférence une protéine dégradée, c'est-à-dire une protéine dont le grade de fabrication la rend impropre à l'alimentation humaine ou animale. Elle est alors moins onéreuse et la fabrication de matériaux de construction n'entre pas en compétition avec la fabrication d'aliments.

La protéine peut être de la protéine de soja, du gluten de blé hydrolysé, des protéines de pommes de terre (par exemple la Tubermine®), de l'hémoglobine bovine, de la caséine, de la protéine de pois, ou un mélange de ceux-ci. De préférence, la protéine est de la protéine de soja, du gluten de blé hydrolysé, des protéines de pommes de terre (par exemple la Tubermine®), de l'hémoglobine bovine, de la caséine ou un mélange de ceux-ci.

La protéine de soja est une protéine isolée des graines de soja (*Glycine max*). La protéine de soja est principalement utilisée dans l'alimentation, mais également dans la fabrication de produits courant variés tels que les adhésifs, l'asphalte, les résines, les produits d'entretien ménager, les produits cosmétiques, les encres, les peintures, le papier, les pesticides ou fongicides, les plastiques, etc.

Le gluten de blé hydrolysé est une protéine présente dans les grains de blé et grains d'autres espèces proches, telles que l'orge ou le seigle. En dehors de son utilisation alimentaire, le gluten est utilisé comme entraineur d'air ou émulsifiant.

Les protéines de pommes de terre peuvent être issues de la séparation et la purification par voie physique effectuées sur la pomme de terre à partir d'eaux de végétation des tubercules de pommes de terre. La Tubermine® est un exemple de telles protéines obtenu par thermo-coagulation. Elle est principalement utilisée dans l'alimentation de jeunes animaux.

L'hémoglobine est une protéine dont la principale fonction est le transport du dioxygène chez les vertébrés dont les bovins (*Bos taurus*).

La caséine est une substance protéique qui constitue la majeure partie des composés azotés du lait.

Cette composition peut être utilisée en tant que liant ou colle, par exemple pour la fabrication de matériaux de construction du type panneau de particules.

Dans ce cas, la composition est mélangée avec des particules solides, de préférence lignocellulosiques telles que le bois recyclé, la paille de colza, et par extension des particules solides assimilées aux particules lignocellulosiques telles que le chanvre (par exemple sous forme de chènevotte, c'est-à-dire la partie ligneuse du chanvre séparée après teillage de la fibre et utilisée conventionnellement pour la production de cellulose) et le lin (par exemple sous forme d'anas, c'est-à-dire la partie ligneuse du lin réduite au cours de l'opération de broyage-teillage en petites particules).

La chènevotte de chanvre et les anas de lin sont des sous-produits issus de l'opération d'extraction de la fibre textile et donc peu onéreux.

La quantité de particules solides peut être comprise entre environ 75 % et environ 90 % en poids, de préférence entre environ 80 % et environ 85 % en poids. La composition formant liant constitue alors environ 10 % à environ 25 % en poids du matériau de construction obtenu, de préférence entre environ 15 % et environ 20 % en poids.

La composition comprend alors de préférence entre environ 30 % et environ 60 % en poids d'huile, encore de préférence entre environ 45 % et environ 55 %, toujours de préférence entre environ 47 % et environ 50 %. Par ailleurs, la composition comprend de préférence entre environ 30 % et environ 60 % en poids de protéine, encore de préférence entre environ 45 % et environ 55 %, toujours de préférence entre environ 47 % et environ 50 %.

La composition comprend de préférence un ratio massique huile/protéine compris entre environ 0,5 et environ 2, encore de préférence entre environ 0,94 et environ 1,07, encore de préférence environ 1.

Les panneaux de particules ainsi obtenus sont exempts d'eau, c'est-à-dire sont fabriqués sans emploi d'eau ajouté. Une faible quantité représentant jusqu'à 15 % en poids du matériau, de préférence jusqu'à 10 %, encore de préférence jusqu'à 5 % peut néanmoins être utilisée.

De tels panneaux de particules sont plus hydrophobes que les panneaux de particules conventionnels dont le taux de gonflement après 24 heures (par mesure de la hauteur) est compris entre 20 % et 25 %. Les panneaux de particules obtenus en utilisant la composition décrite ci-dessus comme liant présentent un taux de gonflement après 72 heures (par mesure de la hauteur) d'environ 10 % seulement.

De préférence, la composition comprend du CNSL et de la protéine de soja.

La composition peut comprendre un agent d'expansion. L'agent d'expansion permet à la composition aérée solide d'augmenter en volume pendant sa fabrication. De manière générale, l'agent d'expansion provoque un dégagement gazeux. Le gaz forme alors des bulles et tend à s'échapper hors de la composition. Les cavités de la composition aérée solide sont le résultat de la formation de bulle et du dégazage de la composition.

L'agent d'expansion peut être choisi parmi : le bicarbonate de sodium, le pentane et ses composés substitués, l'isopentane et ses composés substitués le laurylsulfate de sodium (aussi connu sous l'acronyme LSS ou SDS), les agents d'expansion protéiques ou encore le gluten. Les composés substitués du pentane et de l'isopentane sont par exemple ceux employés de manière habituelle pour la fabrication de polyuréthane. De préférence, l'agent d'expansion est le bicarbonate de sodium.

L'agent d'expansion permet lors d'une réaction entre les composés de la composition une aération de celle-ci. Dans certain cas, la composition aérée peut se solidifier, on obtient alors une composition aérée solide. Dans une telle composition aérée solide, l'huile et la protéine réagissent ensemble pour former une matrice solide continue et poreuse constituant elle-même le matériau de construction. Le mélange d'huile et de protéine ne font pas office de colle ou liant ici. La composition aérée solide peut alors également être décrite comme comprenant une matrice solide continue poreuse et des cavités, la matrice solide comprenant une huile et une protéine, l'huile étant du CNSL, de l'huile de neem, de l'huile de lin ou un mélange de ceux-ci. Les cavités sont formées grâce à l'agent d'expansion.

En variante, la composition aérée solide peut être chargée en particules solides. Les particules solides peuvent être les mêmes que celles décrites ci-dessus, c'est-à-dire les particules lignocellulosiques, telles que le bois recyclé, la paille de colza, et assimilées telles que le chanvre, par exemple sous forme de chènevotte, et le lin, par exemple sous forme d'anas. Ces particules solides permettent d'améliorer la propriété isolante thermique du matériau de construction. Par ailleurs, ces particules solides sont peu chères et apportent une charge légère à la structure du matériau de construction. De préférence, la composition aérée solide chargée comprend moins de 30 % en poids de particules solides.

De préférence, la composition comprend du CNSL et de la protéine de soja. La composition comprend alors de préférence entre environ 30 % et environ 60 % en poids d'huile, encore de préférence entre environ 45 % et environ 55 %, toujours de préférence entre environ 47 % et environ 50 %. Par ailleurs, la composition comprend de préférence entre environ 30 % et environ 60 % en poids de protéine, encore de préférence entre environ 45 % et environ 55 %, toujours de préférence entre environ 47 % et environ 50 %.

La composition aérée solide peut présenter une densité comprise entre environ 50 et environ 400 kg/m$^3$, de préférence entre environ 50 et environ 200 kg/m$^3$, toujours de préférence environ 100 kg/m$^3$.

La composition comprend de préférence entre environ 1 % et environ 10 % en poids d'agent d'expansion, encore de préférence entre environ 2 % et environ 8 %, toujours de préférence entre environ 2,5 % et environ 3,5 %.

La composition aérée solide peut présenter une conductivité thermique inférieure à 0,055 W/(m.K), de préférence inférieure à 0,035 W/(m.K), encore de préférence inférieure à environ 0,03 W/(m.K). Ainsi la composition aérée solide est un excellent isolant thermique.

Les propriétés physiques et thermiques de la composition aérée solide permettent de l'utiliser comme matériau de construction. Ainsi, il est possible d'obtenir un matériau de construction bio-sourcé.

La composition peut comprendre encore du glycérol. Dans ce cas, la composition comprend entre environ 1 % et environ 15 % en poids de glycérol, de préférence entre environ 5 % et environ 10 %, toujours de préférence entre environ 7 % et environ 9 %. Le glycérol permet l'obtention d'un matériau semi-rigide à comportement élastique, c'est-à-dire un matériau à mémoire de forme.

La composition aérée solide peut être utilisée comme matériau de construction, notamment comme matériau de construction thermiquement isolant.

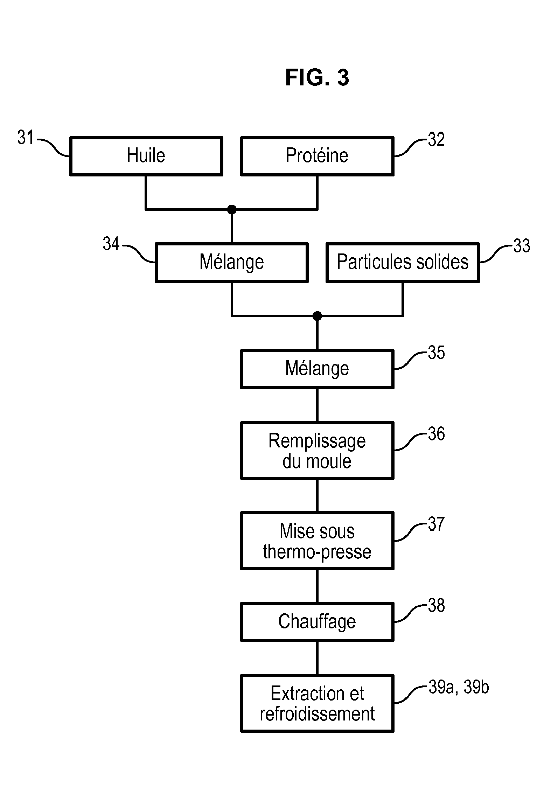

Un procédé de fabrication du matériau de construction composé d'une colle ou liant et de particules solides, la colle ou le liant comprenant une huile et une protéine, l'huile étant du CNSL, de l'huile de neem, de l'huile de lin ou un mélange de ceux-ci, est décrit ci-après en référence à la figure 3.

Ce procédé comprend les étapes de :

- fourniture **31** d'une huile, l'huile étant du CNSL, de l'huile de neem, de l'huile de lin ou un mélange de ceux-ci ;
- fourniture **32** d'une protéine ;
- fourniture **33** de particules solides ;
- mélange **34** de l'huile avec la protéine pour obtenir un liant;
- mélange **35** du liant avec les particules solides pour obtenir une pâte ;
- remplissage **36** d'un moule avec la pâte pour la mise en forme d'un pré-moulé issu de la formation d'un matelas d'épaisseur variable;
- mise **37** sous thermo-presse du pré-moulé ;
- chauffage **38** du pré-moulé disposé sous thermo-presse pour obtenir le matériau de construction ;
- extraction **39a** du matériau de construction hors du moule ;
- refroidissement **39b** du matériau de construction.

Le mélange **34** de la protéine avec l'huile est de préférence effectué à froid, c'est-à-dire à température ambiante.

Les mélanges **34** et/ou **35** peuvent être réalisés à l'aide d'un disperseur ou d'un batteur. Les étapes de mélanges **34** et **35** peuvent être réalisées simultanément, c'est-à-dire que l'huile, la protéine et les particules solides peuvent être mélangés ensemble en une seule étape.

La thermo-presse est réglée à une pression exercée sur le pré-moulé comprise entre environ 5 et environ 20 bar.

Le chauffage **38** du pré-moulé disposé sous thermo-presse est de préférence effectué à une température comprise de préférence entre environ 150 et environ 220°C, encore de préférence entre environ 170 et environ 210°C toujours de préférence inférieure à environ 180°C. Le chauffage **38** est réalisé pendant environ 10 à environ 20 min, de préférence environ 12 à environ 17 min, pour obtenir le matériau de construction.

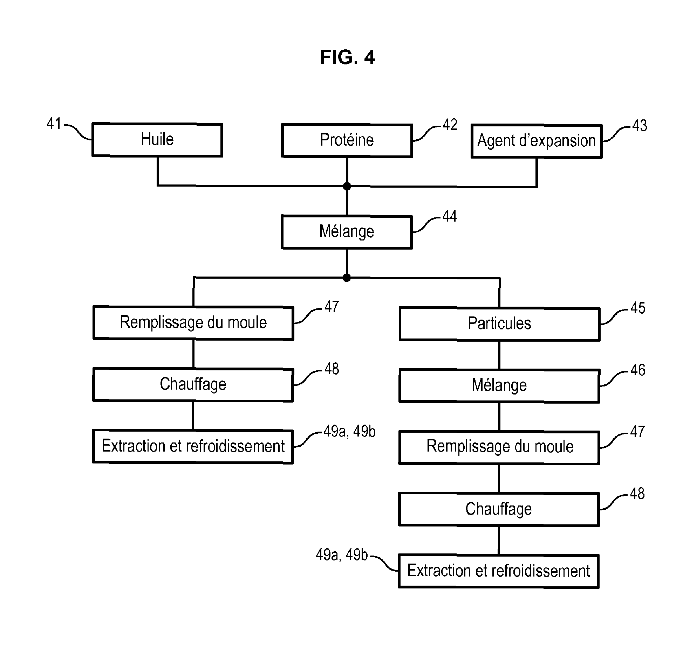

Un procédé de fabrication de la composition aérée solide est décrit ci-après en référence à la figure 4.

Ce procédé comprend les étapes suivantes :

- fourniture **41** d'une huile, de préférence du CNSL, de l'huile de neem ou de l'huile de lin ;
- fourniture **42** d'une protéine ;
- fourniture **43** d'un agent d'expansion ;
- mélange **44** de l'huile, de la protéine et de l'agent d'expansion pour obtenir une pré-composition liquide ;
- remplissage **47** d'un moule avec la pré-composition liquide ;
- chauffage **48** de la pré-composition liquide pour obtenir la composition aérée solide ;
- extraction **49a** de la composition aérée solide hors du moule ;
- refroidissement **49b** de la composition aérée solide.

Le mélange **44** de l'huile, de la protéine et de l'agent d'expansion est réalisé à froid, c'est-à-dire à température ambiante.

Le chauffage **48** de la pré-composition est de préférence réalisé à une température comprise entre environ 70 et environ 150°C, encore de préférence entre environ 75 et environ 120°C, toujours de préférence à environ 80°C. Le chauffage **48** est maintenu pendant une durée comprise entre environ 20 min et environ 60 min, de préférence entre environ 30 min et environ 50 min, encore de préférence entre environ 35 min et environ 45 min. Le chauffage **48** est réalisé préférentiellement dans une étuve sèche.

L'extraction **49a** peut être réalisée avant le refroidissement **49b** car la composition aérée solide obtenue chaude présente une stabilité structurelle importante lui permettant de maintenir sa forme lors du refroidissement hors moule. Cependant, l'extraction **49a** peut être réalisée après le refroidissement **49b** lorsque la thermo-presse comprend des moyens de refroidissement appropriés.

En variante, la composition aérée solide peut être chargée en particules solides, par exemple des fibres végétales. Dans ce cas, les étapes suivantes sont insérées entre le mélange **44** de l'huile, la protéine et l'agent d'expansion et le remplissage **47** d'un moule avec la pré-composition :fourniture **45** de particules solides ;

- mélange **46** des particules solides avec le mélange d'huile, de protéine et d'agent d'expansion pour obtenir la pré-composition.

Ainsi, le terme de pré-composition est comprise comme signifiant le mélange d'huile, de protéine et d'agent d'expansion dans le cas d'une composition aérée solide non chargée et comme le mélange d'huile, de protéine, d'agent d'expansion et de particules solides dans le cas d'une composition aérée liquide chargée en particules solides.

La quantité de particules solides ajoutées est de préférence inférieure à 30 % en poids de la pré-composition pour éviter des problèmes de rhéologie et de formage du matériau de construction dans un moule.

À la fin du chauffage **48** on obtient alors une composition aérée liquide chargée en fibres végétales.

Un usinage pour le formatage à des dimensions déterminées, par exemple des dimensions compatibles avec les standards dans le domaine de la construction, de la composition aérée solide, éventuellement chargée en fibres végétales, est réalisé avant conditionnement pour stockage.

Mesures

*Mesure de la conductivité thermique*

La mesure de la conductivité thermique est réalisée suivant la norme NF EN 12667 : 2001, de la manière suivante.

Une éprouvette du matériau dont la conductivité thermique est à mesurer est préparée. Cette éprouvette comprend deux faces parallèles planes. L'épaisseur $\Delta x$ entre les deux faces parallèles planes est mesurée.

L'éprouvette est disposée ensuite entre deux fluxmètres d'un dispositif (Fluxmètre HFM 376 de Netzsch) de mesure de densité de flux thermique F pour la mesure de ce paramètre, un fluxmètre côté chaud et un fluxmètre côté froid. Une face dite « chaude » de l'éprouvette est donc au contact du fluxmètre côté chaud et l'autre face dite « froide » est au contact du fluxmètre côté froid.

La différence de température $\Delta T$ entre la face chaude et la face froide est mesurée.

La conductivité thermique du matériau est obtenue alors à partir de la formule :

$$\lambda = F \times \Delta x / \Delta T.$$

*Test de flexion*

Des éprouvettes sont fabriquées à partir de panneau. Chaque échantillon possède les dimensions suivantes : 200×50×H longueur×largeur×hauteur), la hauteur *H* étant variable.

Une éprouvette est disposée dans un dispositif de mesure de flexion. Ce dispositif comprend en particulier deux rouleaux fixes espacés et d'un rouleau mobile. L'éprouvette est disposée à cheval sur les deux rouleaux fixes qui sont alors en contact avec une première face de l'éprouvette. Le rouleau mobile est disposé contre la deuxième face de l'éprouvette.

Les mesures ont été réalisées conformément à la norme NF EN 310 : 1993.

Une charge est exercée sur la deuxième face de l'éprouvette à travers le rouleau mobile qui est déplacé en translation et perpendiculairement à la deuxième face de l'éprouvette et entre les rouleaux mobiles.

La première charge appliquée est de 0,05 kN. La charge est ensuite augmentée à une vitesse d'application de 10 N/sec jusqu'à rupture. La charge à la rupture est notée et correspond à la force de rupture de l'éprouvette.

À partir de cette force de rupture $F_R$ est calculée la résistance à la flexion $R_f$ grâce à la formule suivante :

$$R_f = \frac{3}{2} \cdot \frac{F_R \cdot D}{l \cdot H^2},$$

où *D* est la distance entre les points d'appui, c'est-à-dire entre les points de contact des rouleaux fixes avec l'éprouvette, *l* la largeur de l'éprouvette et *H* la hauteur de l'éprouvette.

*Test de gonflement*

Les tests de gonflement sont réalisés selon la norme NF EN 317 : 1993.

Ils consistent à mesurer la hauteur initiale $h_i$ d'un échantillon du matériau de construction. L'échantillon est ensuite baigné dans de l'eau pendant 24 heures (conformément à la norme) ou 72 heures. Après ce temps, l'échantillon est sorti de l'eau et sa hauteur $h_f$ est à nouveau mesurée pour noter sa valeur après 24 heures de trempage ou 72 heures de trempage.

Le taux de gonflement $\tau$ est obtenu suivant la formule :

$$\tau = \frac{h_f - h_i}{h_i}.$$

Exemple 1

Un premier exemple d'une composition aérée solide est donné ci-après.

Cette composition aérée solide est fabriquée à partir d'un mélange composé de 48,6 % de CNSL, 48,6 % de protéine de soja et 2,8 % de bicarbonate de sodium. Les pourcentages étant des pourcentages massiques.

Le mélange est déversé dans un moule. Le moule rempli du mélange est ensuite placé à 80°C pendant 20 min environ dans une étuve.

La composition aérée solide est ensuite sortie du moule et refroidie.

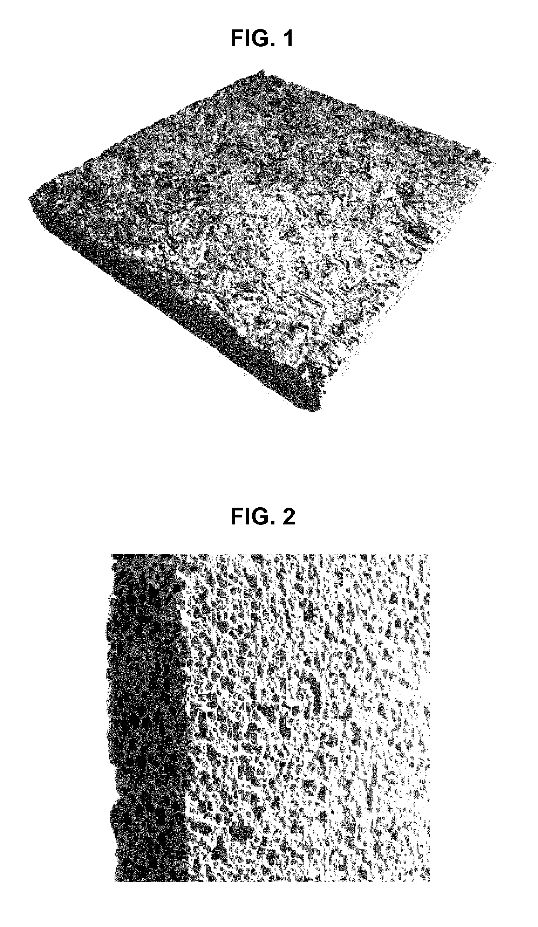

La figure 2 montre un détail de la composition aérée solide obtenue. La composition aérée solide comprend une matrice solide continue, obtenue par réaction du CNSL et de la protéine de soja, et des cavités.

La composition aérée solide obtenue présente une masse volumique de 290 kg/m$^3$ et une conductivité thermique de 0,052 W/(m.K).

Exemple 2

Un deuxième exemple d'une composition aérée solide est donné ci-après.

Cette composition aérée solide est fabriquée de la même manière que la composition aérée solide de l'exemple 1, mais la protéine de soja est remplacée par l'hémoglobine bovine.

La composition aérée solide ainsi obtenue présente une masse volumique de 364 kg.m$^3$ et une conductivité thermique de 0,054 W/(m.K).

Exemple 3

Un exemple d'utilisation d'une composition comprenant 50 % en poids de CNSL et 50 % en poids de protéine de soja pour la fabrication de panneaux de particules comprenant 20 % en poids de la composition et 80 % en poids de particules de bois recyclé, est décrit ci-après.

La composition est mélangée avec les particules de bois, ce mélange est déversé dans un moule et le tout est chauffé à une température inférieure à 180°C pendant 15 min. Des panneaux de $20 \times 20 \times 2,5$ cm sont obtenus (figure 1).

Un test de flexion conduit conformément à la méthode décrite ci-dessus donne une résistance en flexion de 12,17 MPa.

Le taux de gonflement par mesure de la hauteur est de 10 % environ après 72 heures de trempage.

Exemple comparatif 1

Les panneaux de polyuréthane sont traditionnellement fabriqués par mélange bi-composant de polyol et d'isocyanate.

Les panneaux obtenus ont les caractéristiques suivantes (obtenues suivant les normes indiquées ci-dessus) :

- Une densité de 290 kg.m$^{-3}$ correspondant à une conductivité thermique de 0,052 W /(m.K) ;
- Une densité de 420 kg.m$^{-3}$ correspondant à une conductivité thermique de 0,065 W /(m.K).

Ainsi, la composition aérée solide de l'exemple 1 ou l'exemple 2 permet d'obtenir un matériau de construction ayant les mêmes propriétés que les panneaux de polyuréthane de plus faible densité sans présenter les inconvénients liés à l'utilisation d'isocyanate, composé cancérigène

Par ailleurs, les panneaux de polyuréthane présentent l'inconvénient de produire de l'acide cyanhydrique, composé très toxique, lorsqu'ils sont incinérés.

Exemple comparatif 2

Les panneaux de particules de type P4 destinés au mobilier de bureau présentent des performances mécaniques semblables au panneau de particules de l'exemple 3, mais sont obtenus avec des liants à base d'urée/formol (composés non bio-sourcés).

Ces panneaux de particules de type P4 présentent une résistance en flexion de 12 à 16 MPa et un taux de gonflement par mesure de la hauteur conformément à la norme citée ci-dessus de 20 à 25 % (en 24 heures).

Ainsi, le panneau de particule de l'exemple 3 est plus hydrophobe que ces panneaux de particules de type P4.

**Revendications**

1. Composition comprenant une huile et une protéine, l'huile étant du baume de cajou, de l'huile de neem, de l'huile de lin ou un mélange de celles-ci, ladite composition comprenant entre 30% et 60% en poids d'huile.

2. Composition selon la revendication 1, dans laquelle la protéine est de la protéine de soja, du gluten de blé hydrolysé, des protéines de pomme de terre, de l'hémoglobine bovine, de la caséine, ou un mélange de ceux-ci.

3. Composition selon la revendication 2, dans laquelle l'huile est du baume de cajou et la protéine de la protéine de soja.

4. Composition selon l'une des revendications 1 à 3, comprenant en outre des particules solides, de préférence des particules lignocellulosiques ou assimilés, tels que le bois recyclé, la paille de colza, le chanvre et le lin.

5. Composition selon la revendication 4, comprenant au plus 15 % en poids d'eau, de préférence au plus 10 %, encore de préférence 5 %.

6. Composition selon la revendication 4, en outre exempte d'eau.

7. Composition selon l'une des revendications 1 à 4, comprenant en outre un agent d'expansion.

**8.** Composition selon la revendication 7, dans laquelle l'agent d'expansion est choisi parmi : le bicarbonate de soude, le pentane, les dérivés substitués du pentane, l'isopentane, les dérivés substitués de l'isopentane, le laurylsulfate de sodium, des mélanges protéiques, du gluten, ou un mélange de ceux-ci.

**9.** Composition selon la revendication 7 ou la revendication 8, dans laquelle la composition est une composition aérée solide.

**10.** Composition selon la revendication 9, comprenant en outre 1 à 15 % en poids de glycérol, de préférence 5 à 10 %, encore de préférence 7 à 9 %.

**11.** Composition selon la revendication 9 ou la revendication 10, présentant une densité comprise entre 50 et 400 kg/m$^3$, de préférence entre 50 et 200 kg/m$^3$, encore de préférence environ 100 kg/m$^3$.

**12.** Composition selon l'une des revendications 9 à 11, présentant une conductivité thermique inférieure à 0,055 W/(m.K), de préférence inférieure à 0,035 W/(m.K), encore de préférence environ 0,03 W/(m. K).

**13.** Procédé de fabrication d'une composition aérée solide, comprenant :

- le mélange d'une huile, d'une protéine et d'un agent d'expansion, ledit mélange comprenant entre 30% et 60% en poids d'huile ;
- le chauffage du mélange à une température comprise entre 70 et 150°C, de préférence entre 75 et 120°C, encore de préférence environ 80°C pour obtenir la composition aérée solide.

**14.** Procédé selon la revendication 13, dans lequel l'huile étant du baume de cajou, de l'huile de neem, de l'huile de lin ou un mélange de ceux-ci.

**15.** Procédé selon la revendication 13 ou la revendication 14, dans lequel la protéine est de la protéine de soja ou du gluten de blé hydrolysé ou des protéines de pomme de terre, ou de l'hémoglobine bovine, ou de la caséine, ou un mélange de ceux-ci.

**16.** Procédé selon la revendication 15, dans lequel l'huile est du baume de cajou et la protéine de la protéine de soja.

**17.** Utilisation de la composition selon l'une des revendications 1 à 3 comme colle ou adhésif pour la fabrication d'un matériau de construction comprenant en outre des particules lignocellulosiques ou assimilés, tels que le bois recyclé, la paille de colza, le chanvre et le lin.

**18.** Utilisation de la composition selon l'une des revendications 7 à 12 comme matériau de construction.

FIG. 1

FIG. 2

# FIG. 3

# FIG. 4

```
 41            Huile  42        Protéine   43      Agent d'expansion
                                              44
                                          Mélange

           47                                      45
   Remplissage du moule                          Particules

           48                                      46
        Chauffage                                 Mélange

        49a, 49b                                   47
Extraction et refroidissement              Remplissage du moule

                                                   48
                                                Chauffage

                               49a, 49b            
                               Extraction et refroidissement
```

Europäisches
Patentamt

European
Patent Office

Office européen
des brevets

**RAPPORT DE RECHERCHE EUROPEENNE**

Numéro de la demande

EP 13 18 7741

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2007/064970 A1 (HEARTLAND RESOURCE TECHNOLOGIE [US]; WESCOTT JAMES M [US]; BIRKELAND M) 7 juin 2007 (2007-06-07) * alinéas [0008] - [0010], [0014] - [0062]; revendications; exemple 6 * | 1-18 | INV.<br>C08J9/00<br>C08J9/06<br>C09J189/00<br>C09J191/00<br>C08L79/02<br>C08L89/00<br>C08L91/00<br>C08L97/02 |
| A | GB 01452 A A.D. 1908 (CASTERAN JEAN FREDERIC [FR]) 7 janvier 1909 (1909-01-07) * le document en entier * | 1-18 | |
| X | DE 10 2009 019550 A1 (OPTISENS GMBH [DE]) 7 avril 2011 (2011-04-07) | 1,2,4,5, 9-12,17, 18 | |
| Y | * alinéas [0006] - [0010], [0014], [0017], [0023] - [0026], [0063] - [0066]; revendications; exemple 17 * | 3 | |
| Y | BHATIA D N ET AL: "FEASIBILITY STUDIES ON REPLACING LINSEED OIL BY CASHEWNUT SHELL LIQUID IN CORE PRACTICE", INDIAN FOUNDRY JOURNAL, CALCUTTA, IN, vol. 21, no. 6, 1 juin 1975 (1975-06-01), pages 10-15, XP002037375, ISSN: 0379-5446 * le document en entier * | 3 | DOMAINES TECHNIQUES RECHERCHES (IPC)<br><br>C08J<br>C09J<br>C08L |
| A | US 5 512 090 A (FRANKE HANS G [US] ET AL) 30 avril 1996 (1996-04-30) * colonne 1, ligne 43 - colonne 4, ligne 39; revendications * | 1-18 | |
| X | GB 11028 A A.D. 1903 (PREAUBERT LOUIS [FR]; THUBE GASTON AMEDEE [FR]) 17 mars 1904 (1904-03-17) * le document en entier * | 1,2,4-6 | |

Le présent rapport a été établi pour toutes les revendications

| Lieu de la recherche | Date d'achèvement de la recherche | Examinateur |
|---|---|---|
| Munich | 29 novembre 2013 | Otegui Rebollo, Juan |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 18 7741

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-11-2013

| Document brevet cité<br>au rapport de recherche | | Date de<br>publication | Membre(s) de la<br>famille de brevet(s) | | Date de<br>publication |
|---|---|---|---|---|---|
| WO 2007064970 | A1 | 07-06-2007 | US<br>WO | 2007148339 A1<br>2007064970 A1 | 28-06-2007<br>07-06-2007 |
| GB 190801452 | A | 07-01-1909 | AUCUN | | |
| DE 102009019550 | A1 | 07-04-2011 | AUCUN | | |
| US 5512090 | A | 30-04-1996 | AUCUN | | |
| GB 190311028 | A | 17-03-1904 | AUCUN | | |

EPO FORM P0460

Pour tout renseignement concernant cette annexe : voir Journal Officiel de l'Office européen des brevets, No.12/82

**EP 2 716 697 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2308939 A
- WO 9740195 A
- EP 15761 A
- WO 2010120748 A
- EP 1930355 A
- GB 756555 A